# EUROPÄISCHE PATENTANMELDUNG

(11) **EP 1 208 810 A2**
(43) Veröffentlichungstag der Anmeldung: **29.05.2002**
(21) Anmeldenummer: 01127704.3
(22) Anmeldetag: 21.11.2001
(51) Int. Cl.: A61C 1/18

(54) **Kugellager und Kugellagereinheit**

(30) Priorität: 21.11.2000 DE 10057861
(71) Anmelder: MKL-Miniaturkugellager GmbH, 88299 Leutkirch im Allgäu (DE)
(72) Erfinder: Beckers, Johannes, 88299 Leutkirch (DE); Gaile, Otto, 88299 Leutkirch (DE); Engler, Martin, 88299 Leutkirch-Adrazhofen (DE); Föhr, Edmund, 88410 Bad Wurzach-Haidgau (DE); Mösle, Peter, 88299 Leutkirch-Diepoldshofen (DE)
(74) Vertreter: Patentanwälte Eisele, Otten, Roth & Dobler

(57) **Zusammenfassung**

Es wird ein Kugellager (6) und eine Kugellagereinheit, insbesondere für schnelllaufende Geräte wie Dentalturbinen, Dentalwinkelhandstücke, Turbomolekularpumpen oder dergleichen, mit Kugeln (4), die zwischen einem inneren Laufring (7) und einem äußeren Laufring (8) angeordnet sind, vorgeschlagen, das bzw. die im drehenden Betrieb, insbesondere während einer Anlauflaufphase, wesentlich bessere Laufeigenschaften aufweist, wobei gleichzeitig eine Überlastung des Kugellagers bzw. der Lagereinheit durch die Vorspannung bzw. aufgrund von Geometrieabweichungen und/oder Montageungenauigkeiten verhindert wird. Dies wird erfindungsgemäß dadurch erreicht, dass eine Vorrichtung (4) zur Erzeugung einer von einer Drehzahl (n) abhängigen Spannkraft vorgesehen ist.

## Beschreibung

Die Erfindung betrifft ein Kugellager sowie eine Kugellagereinheit, insbesondere für schnelllaufende Geräte wie Dentalturbinen, Dentalwinkelhandstücke, Turbomolekularpumpen und dergleichen, nach den Oberbegriffen der Ansprüche 1 und 12.

Bislang werden für schnelllaufende Geräte wie Dentalturbinen, Dentalwinkelhandstücke, Turbomolekularpumpen oder dergleichen hochpräzise Kugellager, die mit dem Antriebselement dazwischen auf einer Welle montiert werden, eingesetzt. Diese Lager bzw. Lagereinheiten weisen eine fest installierte Vorspannung auf, die durch Metall- oder Elastomerfederelemente aufgebracht wird. Durch das Einwirken der Vorspannung werden die Kugellager spielfrei eingestellt.

Durch die Vorspannung des Lagers wird ein Laufbahnversatz realisiert. Dieser Laufbahnversatz wird beispielsweise bei einem zweireihigen Kugellager mittels unterschiedlicher axialer Laufbahnabstände des äußeren und des inneren Laufringes erreicht. Bei Lagereinheiten mit zwei gleichartigen, einreihigen Kugellagern wird der Laufbahnversatz insbesondere mittels entsprechender Ausgestaltung der Kugellagerringe oder mittels einer mechanischen Justierung der Kugellagerringe und/oder mittels federelastischer Elemente erreicht, deren Kraftfluss über die Kugeln fließt und von der Lagerung aufgenommen wird, so dass keine nach außen wirksame resultierende Kraft entsteht.

Bei entsprechenden Kugellagern bzw. Lagereinheiten ist jedoch nachteilig, dass durch die fest installierte Vorspannung der Lagerung ein Reibmoment im Lager erzeugt wird, das auch bei kleinsten Drehzahlen bzw. im Anfahrbereich wirkt und diesen nachteilig beeinflusst. Axiale Geometrieabweichungen der Lagersitze und/oder Montageungenauigkeiten können die Vorspannkraft signifikant verändern und somit eine Überlastung oder eine zu geringe Vorspannung des Lagers hervorrufen.

### Aufgabe und Vorteile der Erfindung

Aufgabe der Erfindung ist es demgegenüber, ein Kugellager bzw. eine Lagereinheit, insbesondere für schnelllaufende Geräte wie Dentalturbinen, Dentalwinkelhandstücke, Turbomolekularpumpen oder dergleichen, vorzuschlagen, das bzw. die im drehenden Betrieb, insbesondere während einer Anlauflaufphase, wesentlich bessere Laufeigenschaften aufweist, wobei gleichzeitig eine Überlastung des Kugellagers bzw. der Lagereinheit durch die Vorspannung bzw. aufgrund von Geometrieabweichungen und/oder Montageungenauigkeiten verhindert wird.

Diese Aufgabe wird ausgehend von einem Kugellager sowie einer Lagereinheit der einleitend genannten Art durch die kennzeichnenden Merkmale der Ansprüche 1 und 12 gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßes Kugellager dadurch aus, dass wenigstens eine Vorrichtung zur Erzeugung einer drehzahlabhängigen Spannkraft vorgesehen ist.

Mit Hilfe einer erfindungsgemäßen Vorrichtung kann beispielsweise ein Kugellager realisiert werden, das für unterschiedliche Betriebszustände unterschiedlich große Verspannungen aufweist. Im drehenden Betriebszustand kann das Kugellager eine einstellbare Spannkraft aufweisen, die sich kontinuierlich oder in Abhängigkeit vorgegebener Drehzahlbereiche schrittweise ändert. Dies führt insbesondere zu einem gleichmäßigeren Lauf des Kugellagers.

Vorzugsweise ist, vor allem zur Verbesserung des Anlaufverhaltens bzw. zur Verkürzung einer Anlaufphase, eine vergleichsweise geringe Spannkraft während der Anlaufphase vorgesehen, so dass eine vergleichsweise geringe Antriebskraft benötigt wird. Dies ist u.a. bei pneumatischen oder hydraulischen Antrieben von Vorteil, wie sie beispielsweise für Zahnarztturbinen vorgesehen sind. Die Spannkraft wird in der geforderten Größe bei Erreichen der Betriebsdrehzahl erreicht.

In vorteilhafter Weise ist im eingebauten Ruhezustand ein definiertes, axiales Verschieben der beiden Laufringe zueinander, d.h. Axialspiel des Lagers, vorgesehen. Ein definiert eingestelltes Axialspiel im Ruhezustand stellt eine Abkehr von den bisherigen Entwicklungen hochpräziser Kugellager dar. Aufgrund des durch das Axialspiel realisierbaren sehr geringen Anlaufreibmomentes wird jedoch ein besonders schnelles Erreichen der Betriebsdrehzahl ermöglicht.

Demgegenüber ist auch eine vergleichsweise große Verspannung des Kugellagers, insbesondere zur Verkürzung einer Auslaufphase des Lagers, denkbar. Weiterhin kann zum Halten des Kugellagers eine entsprechend vorgegebene große Spannkraft im Ruhezustand von Vorteil sein.

Vorteilhafterweise ist eine maximale Spannkraft beim Erreichen der maximalen Betriebsdrehzahl vorgesehen. Dies gewährleistet eine vergleichsweise große Steifigkeit des Lagers, insbesondere beim Beginn einer Belastung. Gleichzeitig verhindert die vergleichsweise große Spannkraft weitestgehend ein Verkippen des Außenrings, was zu einer vorteilhaften Reduzierung der Lagergeräusche führt. Gegebenenfalls ist zusätzlich eine Änderung der Spannkraft in Abhängigkeit der Belastung vorgesehen.

Vorzugsweise wird die erfindungsgemäße Vorrichtung mittels wenigstens einem unterschiedlich spannbaren Spannelement, mehrerer zuschaltbarer Federn oder dergleichen realisiert. Insbesondere zur Ermittlung der Drehzahl kann ein Sensor, z.B. ein Wirbelstromsensor, ein optischer Sensor oder dergleichen, vorgesehen werden.

In einer vorteilhaften Weiterbildung der Erfindung ist ein Stellglied, insbesondere ein Fliehkraftregler, zur fliehkraftabhängigen Steuerung oder Regelung vorgesehen. Hierdurch wird gewährleistet, dass eine vorteilhafte, kontinuierliche Anpassung bzw. Regelung der Spannkraft an sich ändernde Betriebsdrehzahlen realisiert werden kann. Auf sonstige Sensoren kann hierdurch gegebenenfalls verzichtet werden.

In einer besonderen Ausführungsform der Erfindung umfasst die Vorrichtung wenigstens einen Teil der Kugeln des Lagers. Die im Lager drehenden Kugeln können somit nicht nur als Wälzkörper, sondern aufgrund der drehzahlabhängig auf die Kugeln wirkenden Fliehkräfte auch als Sensor- und Stellelement verwendet werden. Hierdurch bilden die Kugeln in Verbindung mit ihren Laufbahnen einen Fliehkraftregler und können gleichzeitig als Spannelemente dienen, wodurch eine vorteilhafte selbstregulierende und zugleich selbstverstärkende Verspannung des Kugellagers mit vergleichsweise geringem Aufwand realisierbar ist.

Vorteilhafterweise ist ein Kugelwerkstoff mit einer spezifischen Dichte größer 5 g/cm³ vorgesehen. In bekannter Weise ist die Fliehkraft eines Körpers insbesondere von der Dichte abhängig. Eine spezifische Dichte größer 5 g/cm³ des verwendeten Kugelwerkstoffs erzeugt erfindungsgemäß eine vergleichsweise große Fliehkraft pro Kugel. Auch kann die Fliehkraft durch vorteilhafte Anpassung des Kugeldurchmessers verändert werden.

Die Spannkraft des Kugellagers bei Betriebsdrehzahl hängt hierbei von der Summe der einzelnen Kugelfliehkräfte ab. Mit Hilfe zahlreicher, aufwendiger Experimente konnte festgestellt werden, dass insbesondere bei einer spezifischen Dichte größer 5 g/cm³ bei entsprechenden schnelllaufenden Kugellagern, wie z.B. bei Miniaturkugellagern für Zahnarztturbinen oder dergleichen, Vorspannkräfte erzeugt werden können, die zur wesentlichen Verbesserung der Steifigkeit der Lagerung führen.

Vorzugsweise besteht wenigstens eine Kugel im Wesentlichen aus Stahl, wobei Stahl eine spezifische Dichte von ca. 7,7 g/cm³ aufweist. Hierdurch kann in vorteilhafter Weise auf gängige Kugelwerkstoffe zurückgegriffen werden, so dass eine besonders wirtschaftliche Ausführung der erfindungsgemäßen Vorrichtung realisierbar wird.

In einer vorteilhaften Weiterbildung der Erfindung besteht wenigstens eine Kugel im Wesentlichen aus Zirkondioxid. Zirkondioxid besitzt eine Dichte von ca. 6 g/cm³, so dass entsprechende Kugeln ebenfalls zur Erzeugung einer erfindungsgemäßen Spannkraft vorgesehen werden können.

In einer besonderen Ausführungsform der Erfindung ist eine Zirkondioxidkugel pro Lagerreihe vorgesehen, wobei die restlichen Kugeln der Lagerreihe aus Stahl bestehen. Diese oder eine vergleichbare Kombination von Zirkondioxidkugeln mit Stahlkugeln führt aufgrund vergleichbarer werkstoffphysikalischer Eigenschaften von Zirkondioxid mit denen von Stählen im Betrieb des Lagers zu verschiedensten Vorteilen. Beispielsweise weist Zirkondioxid und Stahl vergleichbare E-Module und nahezu gleiche lineare Wärmeausdehnungskoeffizienten auf. Damit können Außen- und Innenringe ohne Veränderung der Laufbahnradien mit Stahl- oder ZrO₂-Kugeln zu Kugellagern montiert werden. Die nahezu gleichen linearen Wärmeausdehnungskoeffizienten gewährleisten, dass selbst bei Temperaturbelastungen des entsprechenden Kugellagers keine nennenswerten Veränderungen bezüglich der Laufeigenschaften des Kugellagers auftreten.

Die entsprechende Kombination der Kugeln ermöglicht in vorteilhafter Weise sogar, dass die vergleichsweise harte Zirkondioxidkugel Staub, Abrieb oder dergleichen in die Laufbahnen der Laufringe eindrückt, was zu einer Reduzierung der Lagerbeeinträchtigung führt und zu einer vergleichsweise großen Lebensdauer des Kugellagers führt. Hierbei werden vorzugsweise Laufringe bestehend aus Stahl und/oder Yttriumdotierte Zirkondioxidkugeln vorgesehen.

Darüber hinaus ist bei Verwendung von Zirkondioxidkugeln in Schulterkugellagern, die im Wesentlichen aus Stahl bestehen, vorteilhaft, dass beim Einbau der zu überwindende, vergleichsweise weiche Höcker des Innen- oder Außenrings die Kugeln nicht beschädigt wird. Die vergleichsweise leichte Beschädigung des Höckers ist hierbei für das Laufverhalten des Lagers nicht relevant. Entsprechend positive Merkmale weisen beispielsweise auch Siliziumnitritkugeln auf.

In einer vorteilhaften Weiterbildung der Erfindung ist bei einer Betriebsdrehzahl die Spannkraft ≥ 0,5 % einer dynamischen radialen Tragzahl des Kugellagers. Die dynamische radiale Tragzahl ist in der DIN ISO 281 als die in der Größe und Richtung unveränderliche Radiallast, die ein Wälzlager theoretisch für eine nominelle Lebensdauer von 10⁶ Umdrehungen aufnehmen kann, definiert.

Die dynamische radiale Tragzahl ist eine Lagerkonstante und wird in den Listen der Wälzlagerhersteller angegeben. Der Wert der dynamischen radialen Tragzahl hängt von vielen verschiedenen Faktoren ab, wie z.B. Kugeldurchmesser, Laufbahnradius, Anzahl der Kugeln in einem einreihigen Lager bzw. Anzahl der Kugeln je Reihe in einem mehrreihigen Lager, Anzahl der Wälzkörperreihen im Lager, Lagerart oder Lagerausführung.

Eine entsprechende Dimensionierung des erfindungsgemäßen Kugellagers hat sich in zahlreichen, aufwendigen Experimenten als besonders vorteilhaft herausgestellt. Gegenüber einem Kugellager gemäß dem Stand der Technik kann ein vergleichbares, jedoch erfindungsgemäßes Kugellager mit Drehzahlen weit über 500.000 Umdrehungen in der Minute betrieben werden.

In einer besonderen Ausführungsform der Erfindung weist das Kugellager eine Schmiegung zwischen 1,04 und 1,35 auf, wobei die Schmiegung das Verhältnis eines Laufbahnradius zum Radius der Kugel ist.

Vorzugsweise ist ein Federelement zur Entkopplung, z.B. zur mechanischen und/oder elektrischen Entkopplung, des Kugellagers von einer entsprechenden Aufnahmeeinheit zur Aufnahme des Kugellagers vorgesehen. Ein entsprechendes Federelement gewährleistet, dass aufgrund der mechanischen Entkopplung des Kugellagers ein nahezu geräuschloser Betrieb des Kugellagers realisierbar ist. Vorzugsweise wird hierfür ein mechanisches Federelement, eine Luftfederung oder dergleichen vorgesehen.

Die erfindungsgemäße Entkopplung des Kugellagers von wenigstens einer entsprechenden Aufnahmeeinheit ist insbesondere von Fertigungs- und/oder Montagetoleranzen des Kugellagers sowie der Aufnahmeeinheit weitestgehend unabhängig.

Vorteilhafterweise ist ein Federdämpfungselement zur Entkopplung des Kugellagers vorgesehen. Hierdurch wird ermöglicht, dass zusätzlich zur Entkopplung des Kugellagers auch eine mechanisch stabile Dämpfung der Lagerung realisierbar ist, was vor allem für eine vorteilhafte Anpassung an die Belastung des Lagers im Betrieb vorgesehen werden kann. Beispielsweise kann für den Einsatz des erfindungsgemäßen Kugellagers in einer Dentalturbine oder einem Dentalwinkelhandstück eine einstellbare Federung und Dämpfung der Lagerung an die individuellen Bearbeitungsgewohnheiten des Zahnarztes vorgesehen werden.

Als Federdämpfungselement kann gegebenenfalls eine Schrauben-, Well- oder Tellerfeder, ein Gummielement sowie Kombinationen hiervon oder ein vergleichbares Element vorgesehen werden. Vorteilhafterweise wird wenigstens ein gummielastisches Element vorgesehen, das insbesondere die Stirnseiten als auch die Mantelfläche des Außenringes umgibt. Hierdurch wird eine besonders einfache Ausführung sowie Montage des erfindungsgemäßen Federdämpfungselementes realisierbar.

Grundsätzlich ist ein entsprechendes Feder- oder Federdämpfungselement auch unabhängig von der erfindungsgemäßen Verspannung des Lagers vorteilhaft. Gleichzeitig können diese auch zur elektrischen Entkopplung, d.h. zur Isolation zwischen dem Kugellager und den damit gelagerten Komponenten und der Aufnahmeeinheit, vorgesehen werden.

Vorteilhafterweise ist das Kugellager wenigstens als zweireihiges Kugellager ausgebildet, wobei wenigstens eine sogenannte O-Anordnung oder eine sogenannte X-Anordnung vorgesehen ist. Hierbei kann beispielsweise der innere Laufring mit seinen Laufbahnen als Welle oder Achse und/oder der äußere Laufring als Gehäuse ausgebildet werden. Die Gefahr eines Versatzes bzw. Verkantens bei der Montage der Laufbahnen zueinander wird dadurch minimiert.

Ein erfindungsgemäßes mehrreihiges Kugellager ermöglicht eine vorteilhafte Ausgestaltung des Laufbahnversatzes, wobei insbesondere das im Ruhezustand realisierte, reduzierte Axialspiel kleiner als das maximale Axialspiel des Lagers und größer Null ist. Hierdurch wirken aufgrund der Rotation der Lagerung Fliehkräfte auf die Kugeln, so dass insbesondere deren axiale Komponente die Kugeln gegen die Reibkräfte in den Laufbahngrund des Lagers drängt, wodurch die erfindungsgemäße, drehzahlabhängige Spannkraft des Lagers erzeugt wird.

Vorzugsweise wird eine Lagereinheit mit wenigstens zwei gleichartigen, einreihigen, erfindungsgemäßen Kugellagern realisiert. Hierbei ist wenigstens eine O-Anordnung oder X-Anordnung vorgesehen, wobei insbesondere ein Laufbahnversatz realisiert werden kann, der wiederum ein reduziertes Axialspiel kleiner als das maximale Axialspiel und größer Null aufweist.

### Ausführungsbeispiel

Ein Ausführungsbeispiel der Erfindung ist in der Zeichnung dargestellt und wird anhand der Figuren nachfolgend näher erläutert.

Im Einzelnen zeigen
- Fig. 1: einen schematischen Längsschnitt durch zwei einreihige Kugellager,
- Fig. 2: einen schematischen Längsschnitt durch eine Lagereinheit mit den zwei Kugellagern gemäß Figur 1,
- Fig. 3: einen schematischen Längsschnitt durch eine Lagerpaarung mit zwei weiteren Kugellagern und einem Federdämpfungselement,
- Fig. 4: einen schematischen Längsschnitt durch ein zweireihiges Kugellager und
- Fig. 5: einen schematischen Längsschnitt von einem Ausschnitt eines zweireihigen Kugellagers im Ruhezustand sowie im drehenden Betriebszustand.

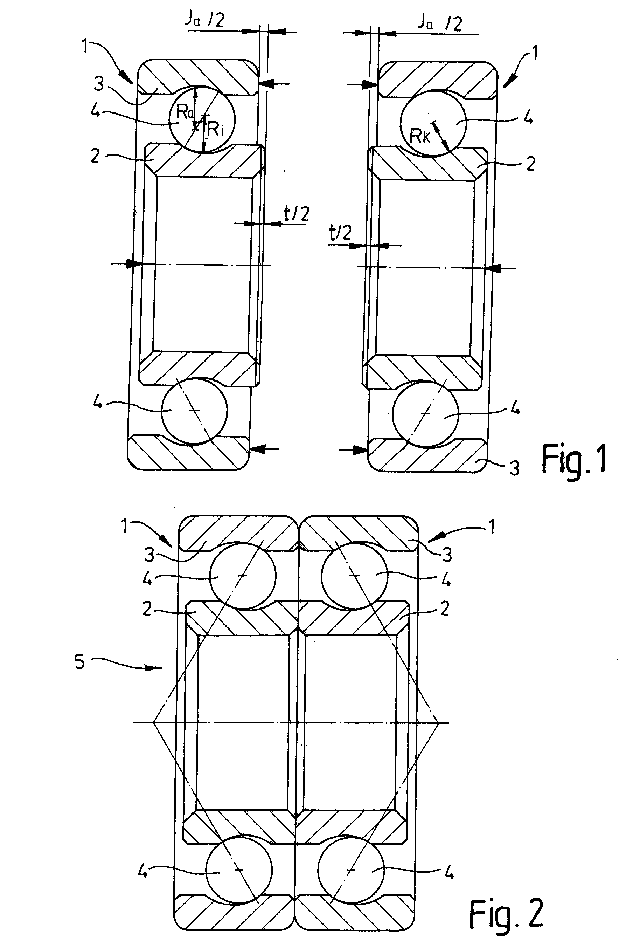

In Figur 1 sind zwei Kugellager 1 dargestellt, die einen Innenring 2, einen Außenring 3 sowie mehrere Kugeln 4 umfassen. Die Kugeln 4 weisen einen Kugelradius R_{K} und der Innenring 2 einen Laufbahnradius Rᵢ sowie der Außenring 3 einen Laufbahnradius Rₐ auf. Erfindungsgemäß weist das Kugellager 1 eine Schmiegung S zwischen 1,04 und 1,25 auf, wobei die Schmiegung S das Verhältnis der Laufbahnradien Rᵢ, Rₐ zum Kugelradius R_{K} ist.

Ein entsprechendes Kugellager 1 weist eine axiale Verschiebemöglichkeit auf, die als sogenanntes Axialspiel Jₐ bezeichnet wird. Hierbei kann der Innenring 2 gegenüber dem Außenring 3 jeweils mit einem halben Axialspiel Jₐ in zwei entgegengesetzte axiale Richtungen verschoben werden.

Erfindungsgemäß wird von jedem Innenring 2 ein halber Abtrag t abgetragen oder t von einem der beiden Innenringe 2, so dass gemäß Figur 2 im eingebauten Zustand die Kugellager 1 eine Lagereinheit 5 mit beispielsweise O-Anordnung bilden.

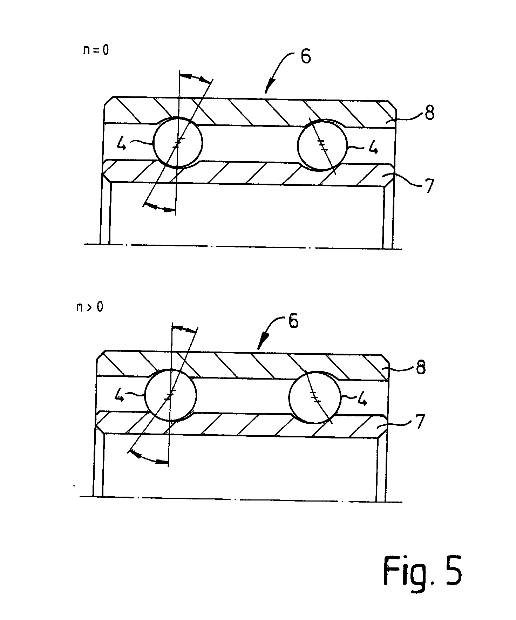

Gemäß Figur 2 ist der Abtrag t kleiner als das Axialspiel Jₐ der Kugellager 1. Erfindungsgemäß wird der Abtrag t vorzugsweise größer Null und kleiner als das Axialspiel Jₐ des Kugellagers 1 gewählt. Hierdurch ergibt sich eine Lagereinheit 5, die im eingebauten Ruhezustand ein reduziertes Axialspiel Jₐ aufweist und bei einer Betriebsdrehzahl n > 0 mit einer Spannkraft Fᵥ vorgespannt ist (vgl. auch Figur 5). Hiermit wird vor allem ein vergleichsweise schnelles Anlaufen sowie eine sehr hohe, gleichmäßige, maximale Betriebsdrehzahl n der Lagereinheit 5 realisiert, so dass keine nennenswerten Wartezeiten vom Einschalten des entsprechenden Gerätes bis zum Erreichen der maximalen Betriebsdrehzahl n entstehen. Gleichzeitig kann aufgrund der höheren maximalen Betriebsdrehzahl n beispielsweise die Bearbeitung mittels entsprechender Geräte verbessert bzw. können eventuell neue Bearbeitungsgebiete für diese erschlossen werden.

In Figur 5 ist ein zweireihiges Kugellager 6 sowohl im Ruhezustand, d.h. mit einer Betriebsdrehzahl n = 0, als auch mit einer Betriebsdrehzahl n > 0 dargestellt. Das Kugellager 6 umfasst einen Innenring 7, einen Außenring 8 sowie Kugeln 4. Der Abstand der beiden Laufbahnen des Innenrings 7 ist hierbei etwas geringer als der Abstand der beiden Laufbahnen des Außenrings 8, so dass das Kugellager 6 zu einer O-Anordnung tendiert. Grundsätzlich ist hier sowie für eine Lagereinheit 5 gemäß Fig. 2 auch eine X-Anordnung vorteilhaft. Dabei ist der Abstand der beiden Laufbahnen des Innenrings 7 etwas größer als der Abstand der beiden Laufbahnen des Außenrings 8.

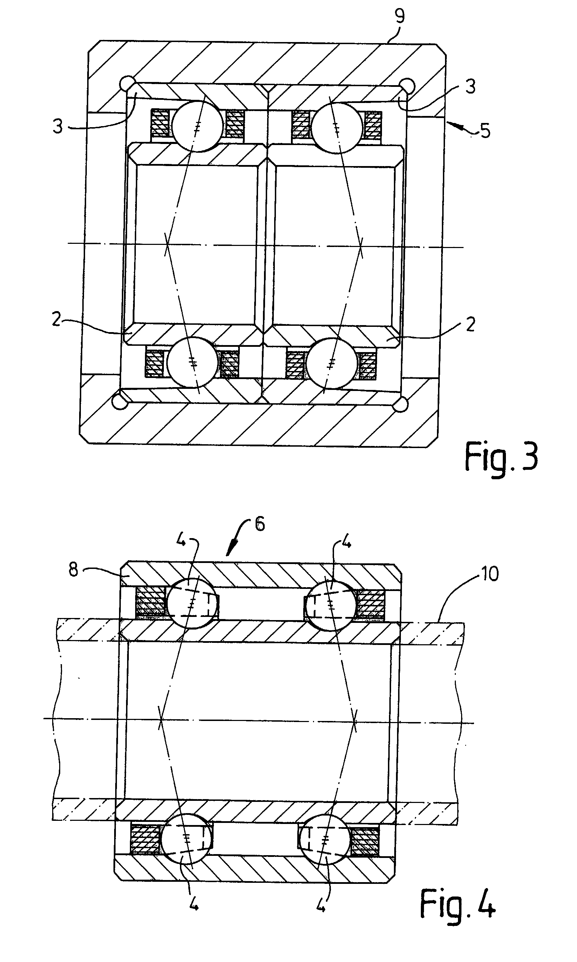

In Figur 3 und 4 sind weitere Varianten der Lagereinheit 5 sowie des zweireihigen Kugellagers 6 dargestellt. Die Lagereinheit 5 gemäß Figur 3 weist hierbei ein Gummielement 9 auf, das zur Entkopplung der Lagereinheit 5 vorgesehen ist. Mittels dem Gummielement 9 wird eine erhebliche Geräuschreduzierung der Lagereinheit 5 im Betrieb umgesetzt. Erfindungsgemäß könnte das Gummielement 9 sich aus beispielsweise wenigstens drei O-Ringen zusammensetzen, wobei vorteilhafterweise zwei O-Ringe stirnseitig und wenigstens ein O-Ring an der Mantelfläche des Außenrings angebracht werden könnte.

Darüber hinaus können auch metallische Elemente wie Schraubfedern, Wellfedern oder dergleichen als Federdämpfungselemente eingesetzt werden. Alle Varianten der Federung bzw. Federdämpfung der Kugellagereinheit 5 können mit vergleichsweise großer Fertigungstoleranz gefertigt und auch bei einem einzelnen Kugellager 1 angebracht werden.

Erfindungsgemäß kann das zweireihige Kugellager 6 eine Hohl- oder Voll-Welle 10 mit zwei entsprechenden Laufbahnen als Innenring aufweisen.

Bei allen erfindungsgemäßen Varianten der Kugellager 1, 6 sowie der Lagereinheit 5 wird insbesondere eine Spannkraft Fᵥ bei einer Betriebsdrehzahl n vorgesehen, wobei die Spannkraft Fᵥ ≥ 0,5 % einer dynamischen radialen Tragzahl Cᵣ des Kugellagers 1, 6 oder der Lagereinheit 5 ist, d.h. Fᵥ/Cᵣ ≥ 0,5 %. So kann ein erfindungsgemäßes Kugellager 1, 6 oder eine erfindungsgemäße Lagereinheit 5 eine maximale Betriebsdrehzahl n weit über 500.000 U/min erreichen.

Als Kugelwerkstoff der Kugel 4 wird Stahl oder Zirkondioxid vorgesehen. Gegebenenfalls wird hierbei eine Zirkondioxidkugel mit mehreren Stahlkugeln pro Lagerreihe vorgesehen. Die vergleichsweise harte Zirkondioxidkugel drückt beispielsweise Abrieb, Staub oder dergleichen im Betrieb in die Laufbahn des vorzugsweise aus Stahl gefertigten Innenrings 2, 7 und/oder des Außenrings 3, 8. Hierdurch wird die Lebensdauer des erfindungsgemäßen Kugellagers 1, 6 sowie der Lagereinheit 5 positiv beeinflusst.

### Bezugszeichenliste:

- 1: Kugellager
- 2: Innenring
- 3: Außenring
- 4: Kugel
- 5: Lagereinheit
- 6: Kugellager
- 7: Innenring
- 8: Außenring
- 9: Gummielement
- 10: Welle

- S: Schmiegung
- Rᵢ: Laufbahnradius
- Rₐ: Laufbahnradius
- R_{K}: Kugelradius
- Jₐ: Axialspiel
- t: Abtrag
- n: Drehzahl
- Fᵥ: Spannkraft
- Cᵣ: Tragzahl

## Patentansprüche

1. Kugellager (1, 6), insbesondere für schnelllaufende Geräte wie Dentalturbinen, Dentalwinkelhandstücke, Turbomolekularpumpen oder dergleichen, mit Kugeln (4), die zwischen einem inneren Laufring (2, 7) und einem äußeren Laufring (3, 8) angeordnet sind, **dadurch gekennzeichnet, dass** wenigstens eine Vorrichtung (4) zur Erzeugung einer drehzahlabhängigen Spannkraft (Fᵥ) zur Verspannung des Kugellagers (1, 6) vorgesehen ist.

2. Kugellager (1, 6) nach Anspruch 1, **dadurch gekennzeichnet, dass** ein Stellglied (4) zur fliehkraftabhängigen Steuerung oder Regelung vorgesehen ist.

3. Kugellager (1, 6) nach einem der vorgenannten Ansprüche, **dadurch gekennzeichnet, dass** die Vorrichtung (4) wenigstens einen Teil der Kugeln (4) umfasst.

4. Kugellager (1, 6) nach einem der vorgenannten Ansprüche, **dadurch gekennzeichnet, dass** ein Kugelwerkstoff mit einer spezifischen Dichte größer 5 g/cm³ vorgesehen ist.

5. Kugellager (1, 6) nach einem der vorgenannten Ansprüche, **dadurch gekennzeichnet, dass** wenigstens eine Kugel (4) im Wesentlichen aus Stahl besteht.

6. Kugellager (1, 6) nach einem der vorgenannten Ansprüche, **dadurch gekennzeichnet, dass** wenigstens eine Kugel (4) im Wesentlichen aus Zirkondioxid besteht.

7. Kugellager (1, 6) nach einem der vorgenannten Ansprüche, **dadurch gekennzeichnet, dass** bei einer Betriebsdrehzahl (n) die Spannkraft (Fᵥ) größer gleich einem halben Hundertstel einer dynamischen radialen Tragzahl (Cᵣ) des Kugellagers ist (Fᵥ/Cᵣ ≥ 0,5 %).

8. Kugellager (1, 6) nach einem der vorgenannten Ansprüche, **dadurch gekennzeichnet, dass** das Kugellager (1, 6) eine Schmiegung S zwischen 1,04 und 1,35 aufweist, wobei die Schmiegung S das Verhältnis eines Radius (Rᵢ, Rₐ) der Laufbahn zum Radius (R_{K}) der Kugel ist.

9. Kugellager (1, 6) nach einem der vorgenannten Ansprüche, **dadurch gekennzeichnet, dass** das Kugellager (1, 6) wenigstens als zweireihiges Kugellager (6) ausgebildet ist, wobei eine O-Anordnung oder X-Anordnung vorgesehen ist.

10. Kugellager (1, 6) nach einem der vorgenannten Ansprüche, **dadurch gekennzeichnet, dass** ein Federelement (9) zur Entkopplung des Kugellagers (1, 6) von einer Aufnahmeeinheit für das Kugellager (1, 6) vorgesehen ist.

11. Kugellager (1, 6) nach einem der vorgenannten Ansprüche, **dadurch gekennzeichnet, dass** ein Feder-Dämpfungs-Element (9) zur Entkopplung des Kugellagers (1, 6) von der Aufnahmeeinheit vorgesehen ist.

12. Lagereinheit (5) mit wenigstens zwei gleichartigen, einreihigen Kugellagern (1), **dadurch gekennzeichnet, dass** Kugellager (1) nach einem der vorgenannten Ansprüche vorgesehen sind.

13. Lagereinheit (5) nach Anspruch 12, **dadurch gekennzeichnet, dass** eine X-Anordnung vorgesehen ist.

14. Lagereinheit (5) nach Anspruch 12, **dadurch gekennzeichnet, dass** eine O-Anordnung vorgesehen ist.
